# EUROPÄISCHE PATENTSCHRIFT

(11) **EP 4 092 853 B1**
(45) Veröffentlichungstag und Bekanntmachung des Hinweises auf die Patenterteilung: **04.03.2026**
(21) Anmeldenummer: 22000114.3
(22) Anmeldetag: 28.04.2022
(51) Int. Cl.: H02G 3/22, H02G 3/38, H02G 3/06

(54) **KABELINSTALLATIONS-SYSTEM**
CABLE INSTALLATION SYSTEM
SYSTÈME D'INSTALLATION DES CÂBLES

(30) Priorität: 29.04.2021 CH 4632021
(43) Veröffentlichungstag der Anmeldung: 23.11.2022
(73) Patentinhaber: Müller, Sascha, 8261 Hemishofen (CH)
(72) Erfinder: Müller, Sascha, 8261 Hemishofen (CH)
(74) Vertreter: Patent- und Rechtsanwälte Behrmann Wagner PartG mbB

(56) Entgegenhaltungen:
- EP-A2- 3 078 891
- DE-A1- 102004 049 046
- DE-A1- 19 825 036

## Beschreibung

Die vorliegende Erfindung betrifft ein Kabelinstallationssystem gemäß Oberbegriff des Anspruchs 1 und insbesondere eine Montagehilfe mit einer ersten Montagehülse (bspw. Einführhülse), welche in ein erstes Holzelement eines Fertigbauteils einsetzbar ist, und mit einer zweiten Montagehülse (bspw. Aufnahmehülse), welche in ein zweites Holzelement eines benachbart anliegenden zweiten Fertigbauteils einsetzbar ist.

Solche Kabelinstallationssysteme, im Folgenden auch Kabelinstallations-Anordnungen genannt, finden ihre Verwendung überwiegend bei Fertigbauteilen im Bereich des Holzsystembaus. Dabei sind in den Rahmenelementen, bspw. den Holzrahmen der vorgefertigten Fertigbauteile, insbesondere den Wand-, Boden- oder Deckenelementen, bereits Leerrohre und Installationskanäle oder dergleichen vorgesehen, um nach der Montage dieser Fertigbauteile die Installation der erforderlichen Elektro-, Telefon- oder Informatikkabel zu ermöglichen. Dabei erweisen sich die Installationsarbeiten für die erforderlichen Installationsleitungen zwischen den einzelnen Fertigbauteilen, insbesondere an den Übergängen im Stoßbereich dieser Fertigbauteile, als unerwünscht zeitaufwändig und arbeitsintensiv.

Es wurde deshalb bspw. mit der US 2003 / 159 242 auch schon vorgeschlagen in die Rahmenelemente, resp. Holzrahmen der vorgefertigten Fertigbauteile eine verankerbare Hülse für die Aufnahme der Installationsleitungen oder der Leerrohre einzusetzen. Leider erfordert die Verwendung derartiger Hülsen eine auf dem Bau impraktikable Passgenauigkeit zwischen den einzelnen Fertigbauteilen. Das Durchschieben einer Installationsleitung oder eines Leerrohrs dafür erweist sich an den Übergängen oft als schwierig oder sogar unmöglich. Darüber hinaus erfordern derartige Einsatzstücke eine unerwünscht weite Bohrung im Rahmenholz der Fertigbauteile, um eine Hülse für das Durchführen eines Leerrohrs, etc. einzusetzen. Es versteht sich, dass derart weite Bohrungen das Rahmenholz und damit die Stabilität der Fertigbauteile schwächen.

Mit der DE 10 2004 049 046 wurde auch vorgeschlagen am Ende eines Leerrohrs, welches in einem vorgefertigten Modul (Wand-, Boden- oder Deckenteil) eines Fertigbauteils verlegt werden soll, ein Element mit einem Kabeleinführtrichter anzubringen, welches ein Kabel beim Durchschieben in das Ende eines damit verbundenen Leerrohrs lenkt, insbesondere um dadurch den Versatz einander fortsetzender Leerrohre bei zwei gegeneinander stoßenden Wandelementen auszugleichen. Leider erweist sich die Montage und Befestigung dieser Elemente - wegen einer erforderlichen Verschraubung - als unerwünscht aufwendig und erfordert die Verwendung derartiger Elemente unerwünscht große Ansenkungen im Holzrahmen der vorgefertigten Fertigbauteile, welche die Stabilität der gesamten Holzkonstruktion schwächen. Aus dieser Druckschrift ist es bekannt einen Kabeleinführtrichter mit einem Steckhülsenbereich für die Aufnahme eines Leerrohrs und mit einem Trichterbereich für das das ungehinderte, d.h. versatzunabhängige Durchschieben von Installationsleitungen auszuführen. Weiterhin ist es bekannt, dass in gegeneinander stoßenden Wandelementen die Kabeleinführtrichter mit den Trichterbereichen zueinander ausgerichtet angeordnet sind.

Weiterhin offenbart die EP 3 078 891 A2 eine Dichtung für eine Leitungsdurchführung zur Anordnung in einem Gehäuse, welche eine Öffnung in dem Gehäuse, durch welche eine Leitung geführt ist, zu dem Gehäuse abdichtet.

Die DE 198 25 036 A1 offenbart eine spritzwasserdichte Durchführung für Kabel und Kabelstränge im Fahrzeugbau, wobei die Durchführung zur Anordnung in einer Trennwand, insbesondere in einem Ausschnitt in einem Blech, ausgebildet ist und einen Nassbereich von einem Trockenbereich abtrennt.

Es ist deshalb Aufgabe der vorliegenden Erfindung eine Kabelinstallations-System zu schaffen, welches die Nachteile der bekannten Systeme überwindet und insbesondere eine in einfacher Weise montier- und befestigbare Kabelinstallations-Anordnung zu schaffen, welches die mechanische Stabilität der einzelnen Fertigbauteile nur minimal oder gar nicht beeinträchtigt.

Aufgrund des sich immer weiter entwickelnden Vorfertigungsgrades der verschiedenen Bauteile im Bereich des Element- oder Modulbaus stellt sich insbesondere die Aufgabe einfache und leicht montierbare Installationsverbindung im Bereich der verschiedenen Modulübergänge, bei Boden-Wand-, Wand-Wand- oder Wand-Decke-Verbindungen, so wie bei verschiedenen Eckverbindungen zu schaffen. Hierbei soll ein später auszuführender einfacher Installationsprozess sichergestellt und gewährleistet sein. Versatzwerte bei aneinanderstoßenden Fertigbauteilen im Bereich von bspw. 5 mm sollten hierbei auch abgefangen werden können.

Diese Aufgabe wird erfindungsgemäß mit einer Kabelinstallationsanordnung mit den Merkmalen des Anspruchs 1 gelöst und insbesondere durch die Verwendung von Montagehülsen, welche in einfacher Weise, d.h. werkzeugfrei in ein vorgegebenes Bohrloch einsetzbar sind und lediglich im Innern unterschiedlich gestaltet sind. Dabei ist es in der Regel unerheblich, ob das Bohrloch für das Versenken eines abstehenden Hülsenrandes mit einer kleinen Ansenkung versehen ist.

Diese Montagehülsen weisen einen Steckhülsenbereich zur Aufnahme von Leerrohren auf, wobei dieser Steckhülsenbereich ein spielfreies Einschieben von marktüblichen Leerrohren mit gängigen Durchmessern erlaubt und mit einer schmalen ringförmigen Anschlagkante für die kontrollierte Aufnahme eines Leerrohres versehen ist. Erfindungsgemäß sind die Außenflächen dieser erfindungsgemäßen Montagehülsen mit mehreren selbsthemmenden Arretierelementen versehen, um eine selbsthemmende Befestigung im jeweiligen Bohrloch zu gewährleisten. Um den Außendurchmesser der jeweiligen Hülsen zu minimieren, weisen diese im Innern kegelstumpfförmig zusammenlaufende Innenflächen auf.

Bei einer ersten Ausführungsform weist eine erste Montagehülse, im Folgenden auch erste Einführhülse bezeichnet, in Durchführrichtung einen ersten Steckhülsenbereich und einen Trichterbereich mit einem sich im Innern kegelstumpfförmig verjüngenden Bereich auf. Im Steckhülsenbereich ist ein Leerrohr, bspw. für ein Elektroinstallationskabel, einsetzbar und werkzeugfrei befestigbar, derart, dass sich bei der weiteren Installation ein einzuführendes Elektroinstallationskabel beim Ein- und Durchziehen nicht verhakt und/oder hängen bleibt. Entsprechend weist die zweite Montagehülse einen zweiten Trichterbereich auf, welcher sich im Innern in Durchführrichtung verengt und in einen zweiten Steckhülsenbereich mündet, in welchem wiederum ein Leerrohr, bspw. ein Elektroschlauch befestigbar ist. Für die sichere Befestigung der jeweiligen Leerrohre weisen die jeweiligen Montagehülsen im Innern ihres Steckhülsenbereichs ein nach innen ragendes Rastelement auf.

Darüber hinaus können die jeweiligen Hülsenränder auf ihrer Außenseite mit einem elastischen Dichtungsring versehen sein, um die erfindungsgemäße Kabelinstallationsanordnung im installierten Zustand vor dem Eindringen von Feuchtigkeit zu schützen.

Die vorliegende Kabelinstallationsanordnung weist grundsätzlich immer eine erste Montagehülse mit einem minimierten Außendurchmesser auf, welche in ein erstes Holzelement eines Fertigbauteils, insbesondere ein Rahmenholz oder ähnliches Bauteil eines Fertigbauteils, in einfacher Weise einsetzbar ist. Eine zweite Montagehülse weist einen minimierten Außendurchmesser derart auf, dass diese in eine Bohrung eines zweiten Holzelementes eines Fertigbauteils, insbesondere ein Rahmenholz oder ähnliches Bauteil eines benachbart montierten Fertigbauteils in einfacher Weise einsetzbar ist. Im Folgenden soll der Begriff "minimiert" verwendet werden, um deutlich zu machen, dass die jeweiligen Montagehülsen derart dimensioniert sind, um im Innern ein handelsübliches Leerrohr spielfrei aufnehmen zu können.

Dabei ist der Außendurchmesser der ersten Montagehülse im Bereich des ersten Steckhülsenbereichs sowie des ersten Trichterbereichs und der Außendurchmesser der zweiten Hülse im Bereich der Transferöffnung des zweiten Trichterbereichs sowie im Bereich der Anschlussöffnung des zweiten Steckhülsenbereichs gleich groß, d.h. ist D_{Ea} = D_{Aa}. Zur besseren Fixierung des vorliegenden Kabelinstallationssystems an den jeweiligen Holzelementen, resp. Rahmenhölzern weisen die erste Montagehülse und die zweite Montagehülse auf ihrer jeweiligen Außenfläche mehrere selbstklemmende Rastelemente zur Befestigung auf.

In einer Weiterbildung der ersten Ausführungsform des vorliegenden Kabelinstallationssystems weist die erste Montagehülse im ersten Steckhülsenbereich eine erste zylindrische Innenfläche auf und weist das Innere des ersten Trichterbereichs eine erste sich in Durchführrichtung kegelstumpfförmig verjüngende Innenfläche auf. Darüber hinaus weist die zweite Montagehülse im zweiten Trichterbereich eine sich in Durchführrichtung kegelstumpfförmig verjüngende Innenfläche auf, deren Innendurchmesser D_{Ti} im Anschlussbereich kleiner ist als der Innendurchmesser D_{Si} der zweiten zylindrischen Innenfläche im zweiten Steckhülsenbereich der zweiten Montagehülse, d.h. ist D_{Ti} < D_{Si}.

Darüber hinaus können die Montagehülsen für die Fixierung eines Leer- oder Installationsrohrs im Steckhülsenbereich vorteilhaft eine satt am Leerrohr anliegende zylindrische Innenfläche aufweisen, welche hilfsweise mit mindestens einem nach innen ragenden Rastelement versehen ist.

In einer besonderen Weiterbildung ist auf der Außenseite des Hülsenrands mindestens bei der zweiten Montagehülse ein elastisches Dichtungselement, resp. ein elastischer O-Ring angebracht, um das Innere des Kabelinstallationssystems weitestgehend abdichten zu können.

Es versteht sich, dass das Maß des erfindungsgemäßen Kabelinstallationssystems möglichst materialsparend gestaltet ist. So weist die Außenfläche der zweiten Hülse im zweiten Trichterbereich die Kontur eines Flachkopfdiabolos, resp. einer Sanduhr auf. Je nach Fertigungsverfahren kann diese auch zylinderförmig ausgeführt sein.

In einer bevorzugten Ausführungsform des erfindungsgemäßen Installationssystems sind die erste und zweite Hülse in identischer Weise ausgebildet und sollen im Folgenden auch "Montagehülse" genannt werden. Diese Montagehülse weist in analoger Weise einen Steckhülsenbereich für die Aufnahme eines Leerrohrs und einen Trichterbereich für das ungehinderte Durchschieben von Installationsleitungen auf. Erfindungsgemäß weist diese Montagehülse sowohl im Steckhülsenbereich als auch im Trichterbereich denselben Außendurchmesser auf. Dies erlaubt es die einzelnen Montagehülsen in vorgefertigte Bohrlöcher einzuschieben, dabei werden die Montagehülsen derart eingeschoben, dass deren Trichterbereiche in benachbart anstoßenden Holzelementen einander zugewandt sind. Um eine sicherere Befestigung der jeweiligen Montagehülsen in den jeweiligen Bohrlöchern zu gewährleisen sind die Montagehülsen mit selbsthemmenden Arretierelementen versehen. Darüber hinaus kann die Montagehülse aus demselben Grund endseitig auch mit mindestens einem wulstförmigen Rand versehen sein.

Der Innenraum dieser Montagehülse weist wiederum zwei unterschiedlich gestaltete Innenflächen auf. So weist der Steckhülsenbereich im Wesentlichen eine zylindrische Innenfläche auf, um ein Leerrohr in einfacher Weise einstecken zu können. Vorteilhafterweise ist im Innern des Steckhülsenbereichs mindestens ein selbsthemmendes Rastelement vorgesehen, um ein eingestecktes Leerrohr besser arretieren zu können. Einen ergänzenden Halt für die Montagehülse bilden endseitig angeordnete und wulstartig nach außen ragende Hülsenränder.

Die Vorteile des erfindungsgemäßen Kabelinstallationssystems sind dem Fachmann unmittelbar ersichtlich. Insbesondere lässt sich dieses System in einfacher Weise für die Durchführung von späteren Installationsleitungen zwischen Boden-Boden-, Boden-Wand-, Wand-Wand-, Wand-Decke- oder Decke-Decke-Fertigbauteilen oder -Modulen verwenden. Darüber hinaus erübrigen sich bei der Verwendung des vorliegenden Installationssystems die sonst für die Installation erforderlichen Revisionsöffnungen. Daher kann der Vorfertigungsgrad weiter gesteigert werden und die bisher zusätzlich erforderlichen Arbeiten entfallen.

Der Einbau kann damit sehr schnell und ohne zusätzliches Werkzeug erfolgen. Darüber hinaus wird der Verschnitt der Leerrohre von ca. 10% auf fast 0% reduziert. Somit kann auch der Fertigungsprozess wesentlich effizienter, kostengünstiger und schneller gestaltet werden. Hierbei können die Installationsleitungen nach dem finalen Zusammenbau der Fertigbau-Elemente oder -Module problemlos eingezogen werden. Jegliche Schnittstellen der Element- oder Modulübergänge sind so vorbereitet, dass keinerlei weitere Kopplungen oder zusätzliche Hilfsmittel für die Installations- oder Leerrohre erforderlich werden. Nicht zuletzt lässt sich mit dem vorliegenden Installationssystem der jeweilige Bohrdurchmesser optimieren, weil die verwendeten Hülsen entsprechend den Dimensionen der vorgesehenen Lehrrohre gewählt werden kann.

Darüber hinaus kann die, wegen der erforderlichen Bohrungen geschwächte, Festigkeit und Stabilität der Holzelemente, resp. der gesamten Holzkonstruktion, durch die Verwendung von erfindungsgemäßen und korrekt gewählten Montagehülsen wesentlich verbessert werden.

Im Folgenden soll das erfindungsgemäße Kabelinstallationssystem anhand von Ausführungsbeispielen und mit Hilfe der Figuren näher erläutert werden. Dabei zeigen:
- Fig. 1:: schematische Darstellung eines Querschnitts durch eine erfindungsgemäße erste Montagehülse;
- Fig. 2:: schematische Darstellung eines Querschnitts durch eine erfindungsgemäße zweite Montagehülse;
- Fig. 3:: räumliche Darstellung einer schematischen Durchsicht einer erfindungsgemäßen ersten Montagehülse;
- Fig. 4:: räumliche Darstellung einer schematischen Durchsicht einer erfindungsgemäßen zweiten Montagehülse;
- Fig. 5:: räumlich Darstellung einer schematischen Durchsicht einer bevorzugten Ausführungsform einer erfindungsgemäßen Montagehülse;
- Fig. 6a:: schematische Darstellung eines Querschnitts durch eine Montagehülse gemäß Fig. 5;
- Fig. 6b:: schematische Darstellung eines Querschnitts durch ein Gegenstück zur Montagehülse gemäß Fig. 6a.

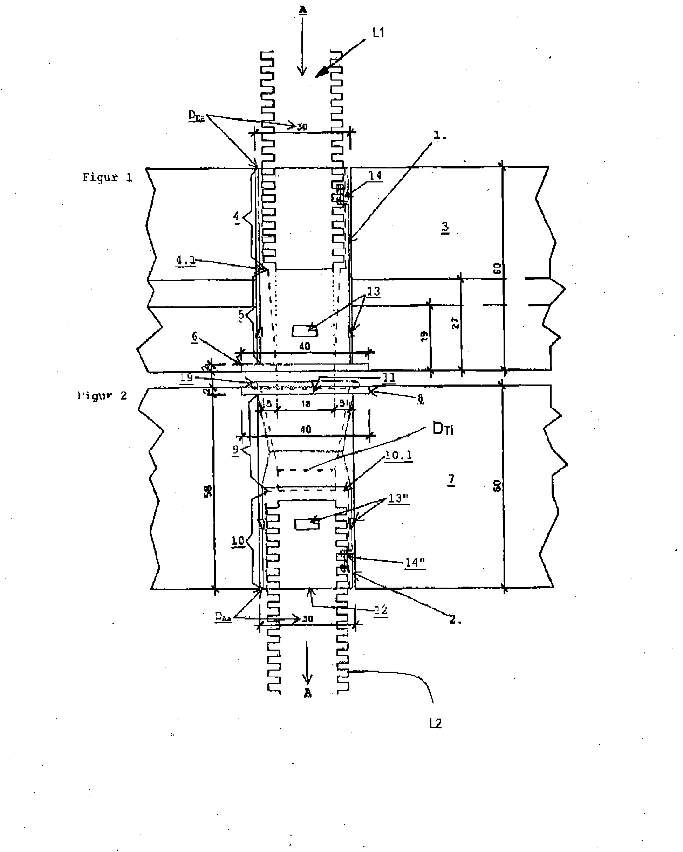

Figuren 1 und 2 machen die Verwendung der erfindungsgemäßen Montagehülsen 1, 2 deutlich. Die dargestellten Hülsen werden aus Kunststoff im Spritzgussverfahren hergestellt. Wie in Fig. 1 dargestellt liegt die erste Hülse 1 dicht in einer Bohrung eines ersten Rahmenholzes oder anderen Holzelementes 3, bspw. mit einer Wandstärke von 15 mm oder mehr. Bei einer beispielhaften Ausführung mit einem 60 mm dicken Rahmenholz und für ein Leerrohr L1, insbesondere ein Installationsrohr (Leerrohr mit Faltenbalg) mit 25 mm Außendurchmesser, weist die, für die Verwendung einer erfindungsgemäßen ersten Hülse, erforderliche Bohrung einen Durchmesser von 30 mm auf. Die dazu verwendete erste Hülse 1 weist einen ersten Hülsenbereich 4, einen ersten Trichterbereich 5 und hilfsweise einen ersten Hülsenrand 6 auf, wobei die erste Hülse 1 für dieses Ausführungsbeispiel idealerweise einen Außendurchmesser D_{Ea} von 28 mm aufweist und an seiner Außenseite mindestens ein Arretierelemente 13 trägt. Mit diesem Arretierelement 13 wird die Hülse in der Bohrung im ersten Rahmenholz oder einem anderen Holzelement 3 verhaken. Die Gesamthöhe der ersten Hülse 1 beträgt hier 60 mm und setzt sich zusammen aus der Höhe des Hülsenbereichs von 58 mm und derjenigen des Hülsenrands von 2 mm. Eine allfällig gewünschte Ansenkung im ersten Holzelement 3, resp. Rahmenholz, erfordert damit einen Durchmesser von 40 mm und eine Tiefe von lediglich 2 mm auf. Je nach Stoßausbildungen bei den Elementübergängen der Fertigbauteile kann der Hülsenrand eingelassen werden oder aufgesetzt bleiben. Somit wird der Hülsenrand bei einer 5 mm Stoßfuge beim Elementübergang aufgesetzt und bei 0 mm Stoßfugen um jeweils 2 mm eingelassen.

Das Innenleben der erfindungsgemäßen ersten Hülse 1 umfasst bei dieser Ausführungsform einen ersten Steckhülsenbereich 4 und einen ersten Trichterbereich 5, wobei in diesem ersten, 26 mm weiten und 30 mm tiefen, Steckhülsenbereich 4 ein erstes Leerrohr L1 mit 25 mm Außendurchmesser dicht anliegend bis zu dem innenliegenden Anschlag 4.1 einschiebbar ist und mit Hilfe eines Rastelements 14, welches an der Innenfläche dieses Steckhülsenbereichs 4 der ersten Hülse 1 ausgebildet ist, arretierbar ist. Die Innenfläche dieses ersten Trichterbereichs 5 ist als ein 30 mm tiefer kegelstupfförmiger Trichtereinlauf ausgeformt, welcher hier eine Transferöffnung 11 mit 23 mm Durchmesser (welcher immer etwas größer ist als der Innendurchmesser des jeweiligen Installationsrohrs, damit keine Anschlagkante bei der späteren Kabeldurchführung entsteht) und eine Austrittsfläche von 18 mm Durchmesser (welcher ebenfalls immer vom Innendurchmesser des jeweiligen Installationsrohrs abhängig ist) aufweist und hier in einen 2 mm starken ersten Hülsenrand 6 mit einem Außendurchmesser von 40 mm (d.h. 10 mm größer als die jeweilige Bohrung) und einem Innendurchmesser von 18 mm mündet. Es versteht sich, dass dieser allfällig Hülsenrand 6 einstückig mit den anderen Bereichen der ersten Hülse 1 verbunden ist.

Fig. 2 zeigt die zweite Hülse 2, wie sie dicht in einer Bohrung eines zweiten Rahmenholzes, resp. anderen Holzelementes 7, bspw. mit einer Wandstärke von 60 mm und für ein Leerrohr L2, insbesondere ein Installationsrohr, mit 25 mm Außendurchmesser. Die für die Verwendung einer erfindungsgemäßen zweiten Hülse 2 erforderliche Bohrung weist hier einen Durchmesser von 30 mm auf. Die dazu verwendete zweite Hülse 2 umfasst bei diesem Ausführungsbeispiel einen zweiten Hülsenrand 8, einen zweiten Trichterbereich 9 und einen zweiten Steckhülsenbereich 10 und weist idealerweise einen Außendurchmesser D_{Aa} von 28 mm auf. Darüber hinaus sind an seiner Außenseite im zweiten Steckhülsenbereich 10 mehrere Arretierelemente 13 ausgebildet, welche sich in der Bohrung im zweiten Rahmenholz oder eines anderen Holzelementes 7 verhaken. Die Gesamthöhe der ersten Hülse 1, ohne den zweiten Hülsenrand 8 beträgt hier 58mm, wobei der dazugehörige zweite Hülsenrand 8 eine Tiefe von 2mm aufweist. Eine allfällig gewünschte Ansenkung im zweiten Rahmenholz oder anderen Holzelementes 7 weist dann einen Durchmesser von 40 mm und eine Tiefe von lediglich 2 mm auf.

Zusammengefasst weist die zweite Hülse 2 im zweiten Trichterbereich 9 eine sich in Durchführrichtung A kegelstumpfförmig verjüngende Innenfläche 17 auf, deren Innendurchmesser D_{Ti} im Bereich der Durchgabeöffnung B_{A} kleiner ist als der Innendurchmesser D_{Si} der zweiten zylindrischen Innenfläche 18 im zweiten Steckhülsenbereich 10 der zweiten Hülse 2, d.h. es gilt D_{Ti} < D_{Si}.

Die Innenfläche dieses zweiten Trichterbereichs 9 ist als ein 25 mm tiefer kegelstumpfförmiger Trichtereinlauf ausgeformt, welcher hier eine Transferöffnung 11 mit 28 mm Durchmesser und eine Trichteraustrittsfläche mit einem Durchmesser D_{Ti} von 18 mm umfasst. Eine zylindrische und 6 mm tiefe Durchgabeöffnung B_{A} liegt zwischen dieser Trichteraustrittsfläche und dem inneren Ende des zylindrischen zweiten Steckhülsenbereichs 10, welcher einen Innendurchmesser D_{Si} von 26 mm aufweist. Durch den reduzierten Durchmesser von D_{Ti} gegenüber D_{Si} entsteht eine Anschlagkante für das einzuführende Installationsrohr und wird damit beim Einführen des Leerrohres L2 die genaue Endposition bestimmt. In dem Innenbereich dieses zweiten, 28 mm weiten und 30mm tiefen, Steckhülsenbereich 10 ist ein Leerrohr L2 dicht anliegend einschiebbar ist und mit Hilfe des Rastelementes 14", welches an der Innenfläche dieses Steckhülsenbereichs 10 der zweiten Hülse 2 ausgebildet ist, selbsthemmend fixiert.

Vorteilhaft ist eintrittsseitig des kegelstupfförmigen Trichtereinlaufs dieser zweiten Hülse 2 ein 2 mm starker zweiter Anschlagsring 8 mit einem Außendurchmesser von 40mm und einem Innendurchmesser von 28 mm angeformt, wobei sich der Durchmesser dieses kegelstupfförmigen Trichtereinlaufs in Durchführrichtung auf 18 mm reduziert. Durch die unterschiedlichen Trichterdurchmesser der im montierten Zustand einander benachbart liegenden ersten (Einführ-) und zweiten (Aufnahme-) Hülsen wird eine Bautoleranz von 5 mm bei den zu verbindenden Bauteilen problemlos ausgeglichen, ohne dass es bei der späteren Leitungsinstallation zu Leitungsdurchführungsproblemen führt.

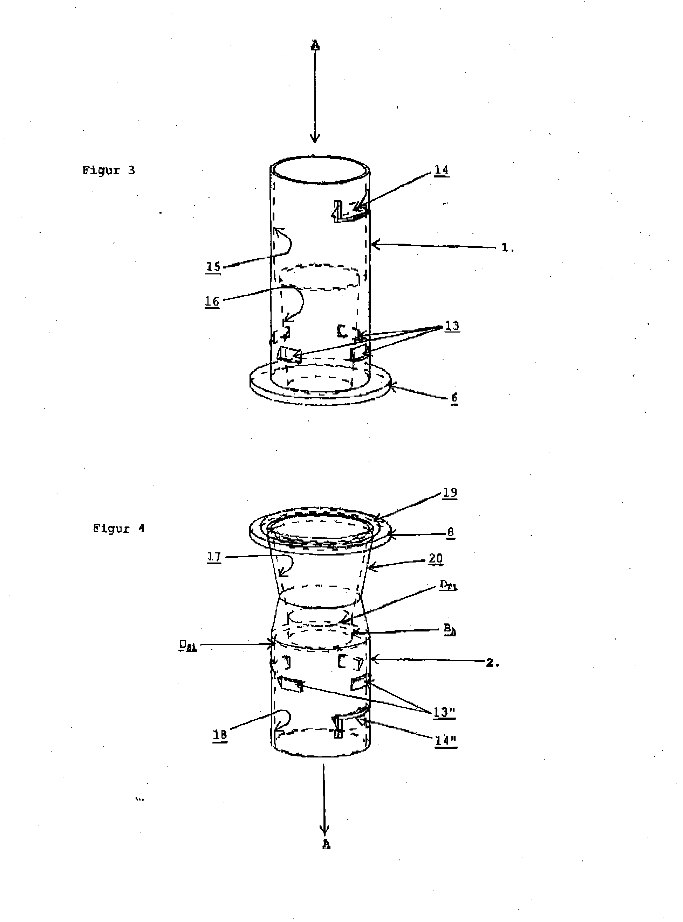

Fig. 3 zeigt eine räumliche Durchsicht der erfindungsgemäßen ersten Hülse 1 und macht deren grundsätzlich hülsenförmige äußere Geometrie deutlich. Lediglich der allfällig vorgesehene erste Anschlagsring 6 und die Arretierelemente 13 überragen den äußeren Durchmesser der ersten Hülse 1. Im Bereich des ersten Steckhülsenbereichs 4 ist vorteilhaft eine erste zylindrische Innenfläche 15 ausgebildet, welche mindestens ein nach innen ragendes Rasterelement 14" für die Befestigung eines Leerrohres L1 o.ä. aufweist, während im ersten Trichterbereich 5 der ersten Hülse 1 eine kegelstumpfförmig zusammenlaufende Innenfläche 16 vorgesehen ist, welche der Überführung allfälliger Kabel, etc. dient.

Die Funktionsweise der Innenflächen der zweiten Hülse 2 ist aus der räumlichen Durchsicht in Fig. 4 ersichtlich. Zur weiteren Überführung allfälliger Kabel weist die erfindungsgemäße zweite Hülse 2 im zweiten Trichterbereich 9 der Aufnahme vorteilhaft eine zweite kegelstumpfförmige Innenfläche 17 auf, welche einen Trichtereinlauf bildet und eine Trichteraustrittsfläche mit einem Durchmesser D_{Ti} aufweist. Eine zylindrische Durchgabeöffnung B_{A} mit einem Durchgang zum größeren Innendurchmesser D_{Si} des zweiten Steckhülsenbereichs liegt zwischen dieser Trichteraustrittsfläche D_{Ti} und dem inneren Ende eines zylindrischen zweiten Steckhülsenbereichs 10, um allfällige Kabel in ein in diesem Steckhülsenbereich 10 angebrachtes Leerrohr L2 zu führen. Durch die Anordnung der unterschiedlichen Innendurchmesser, ist der spätere Einzug einer Installationsleitung möglich ohne Gefahr zu laufen, dass diese an einer abstehenden Kante oder mit einem vorstehenden Übergang kollidiert, gewährleistet. Dazu weist dieser Steckhülsenbereich der zweiten Hülse vorteilhaft eine zweite zylindrische Innenfläche 18 mit einen Innendurchmesser D_{Si} auf, welcher wesentlich größer ist als der Durchmesser D_{Ti} der Trichterauslaufsfläche 17. Nach innen ragende Rastelemente 14" dienen der Befestigung eines erforderlichen Leer- oder Installationsrohrs, während nach außen ragende Arretierelemente 13" der Befestigung der zweiten Hülse 2 in einem Bohrloch dienen. Hilfsweise trägt der auskragende zweite Hülsenrand 8 einen elastischen Dichtungsring 19, um den Übergang weitestgehend dichtend realisieren zu können.

Um möglichst wenig Material für die Herstellung der erfindungsgemäßen Hülsen zu benötigen, folgt die Außenkontur der Hülsen vorteilhafterweise im Wesentlichen der Geometrie ihrer Innenflächen. So weist die in Fig. 4 dargestellt Außenfläche 20 der zweiten Hülse 2 im zweiten Trichterbereich 9 die Kontur eines Flachkopfdiabolos, resp. einer Sanduhr auf. Je nach Fertigungsverfahren kann diese auch zylinderförmig ausgeführt sein.

Die beiden Steckhülsenbereiche 4, 10 können auch jeweils Einschiebestufen aufweisen, welche durch eine stufenartige Verengung des Innendurchmessers gebildet werden und damit die genaue Position des Installationsrohres (Leerrohres) gewährleistet.

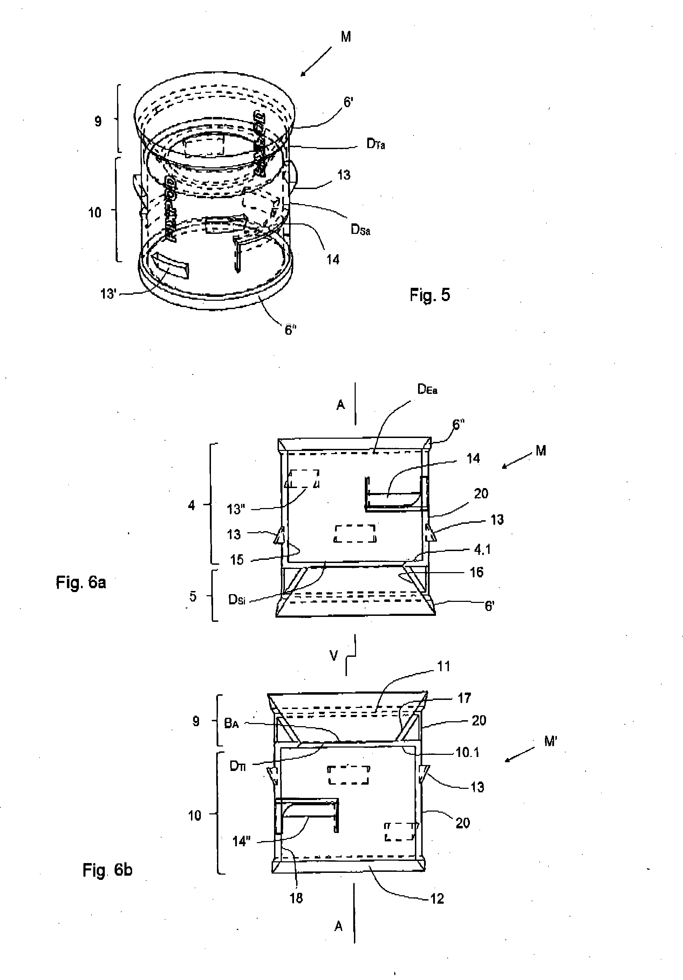

In einer bevorzugten Ausführungsform des erfindungsgemässen Installationssystem sind die erste (1) und zweite Hülse (2) in identischer Weise ausgebildet. Fig. 5 zeigt eine solche Montagehülse (M), die für die Verwendung in einem erfindungsgemässen Kabelinstallationssystem als erste Hülse (1) und auch als zweite Hülse (2) eingesetzt werden kann. Diese Montagehülse (M) weist in analoger Weise einen Steckhülsenbereich (4, 10) für die Aufnahme eines Leerrohrs (L1) und einen Trichterbereich (5, 9) für das ungehinderte Durchschieben von Installationsleitungen auf. Erfindungsgemäss weist diese Montagehülse (M) in beiden Bereichen, d.h. im Steckhülsenbereich (10) als auch im Trichterbereich (9) denselben Aussendurchmesser (D_{Sa} = D_{Ta}) auf. Dies erlaubt es die einzelnen Montagehülsen in vorgefertigte Bohrlöcher einzuschieben. Dabei werden die Montagehülsen derart eingeschoben, dass deren Trichterbereiche (5, 9) in benachbart anstossenden Holzelementen (3, 7) einander zugewandt sind. Um eine sicherere Befestigung der jeweiligen Montagehülsen in den jeweiligen Bohrlöchern zu gewährleisen sind die Montagehülsen (M) mit selbsthemmenden Arretierelementen (13, 13') versehen. Darüber hinaus kann die Montagehülse aus demselben Grund endseitig auch mit mindestens einem wulstförmigen Rand (6', 6") versehen sein. Der Innenraum dieser Montagehülse (M) weist wiederum zwei unterschiedlich gestaltete Innenflächen auf. So weist der Steckhülsenbereich (4, 10) im Wesentlichen eine zylindrische Innenfläche (15) auf, um ein Leerrohr (L1) in einfacher Weise einstecken zu können. Vorteilhafterweise ist im Innern des Steckhülsenbereichs (4, 10) mindestens ein selbsthemmendes Rastelement (14) vorgesehen, um ein eingestecktes Leerrohr (L1) besser halten zu können. Einen ergänzenden Halt für die Montagehülse (M) bilden endseitig angeordnete und wulstartig nach aussen ragende Hülsenränder (6', 6").

Diese Montagehülse (M) kann auch als einzeln als reiner Kabelauslass aus Wänden und Decken, für bspw. Zuleitungen von Beleuchtungskörkern eingesetzt werden. Durch das mindestens eine Arretierelement (13) wird ein versehentliches Zurückschieben des Installationsrohrs verhindert.

Fig. 6a und Fig. 6b zeigt ein Paar einander zugewandter Montagehülsen (M, M') um die Funktionsweise des erfindungsgemässen Kabelinstallationssystems deutlich zu machen. Vor dem Zusammenbau der Fertigbauteile werden die erfindungsgemässen Montagehülsen (M, M') möglichst vollständig in vorgesehene Bohrungen von Holzelementen der Fertigteile eingeschoben, derart, dass der Steckhülsenbereich (4, 10) der Montagehülsen (M, M') ins Innere des Fertigbauteils weist und der Trichterbereich (5, 9) der Montagehülsen nach aussen weist. Für den sicheren Halt der Montagehülsen in der jeweiligen Bohrung ist die Aussenfläche (20) der Montagehülsen vorzugsweise mit selbsthemmenden Arretierelementen (13, 13") versehen und weisen die Montagehülsen endseitig wulstförmige Hülsenränder (6', 6") auf.

Nach dem Zusammenbau zweier benachbart liegender Fertigbauteile stossen deren benachbart liegenden Holzelemente relativ satt aneinander und werden die bereits eingesetzten Montagehülsen (M) in der Regel nicht passgenau, sondern in der dargestellten Weise nur ungefähr einander gegenüberliegen, Dabei stellt eine Abweichung von bspw. ca. 5 mm in der Regel kein Problem dar und kann durch die Trichterform abgefangen werden. Die Zentralachsen (A) dieser Montagehülsen (M) zeigen in diesem Fall einen mehr oder weniger grossen Versatz (V) auf. Erst bei einem grösseren Versatz (V), von bspw. deutlich mehr als ca. 5 mm, kann es zu Problemen kommen, welche das einfache Durchziehen von Installationsleitungen, insbesondere von Kabelleitungen oder Kabelsträngen, vornehmlich von Elektrokabeln für stromführende Leitungen, Signal- und Steuerleitungen oder Antennen-, Netzwerk- und Telefonkabeln, behindern oder sogar ganz blockieren.

Bei dem vorliegenden Kabelinstallationssystem werden vorerst die Leerrohre in den jeweiligen Steckhülsenbereich (4, 10) der bereits in den Holzelementen eingesetzten Montagehülsen (M) eingeschoben, vorzugsweise bis diese im mindestens einen Rastelement (14) einrasten und an der ringförmigen Anschlagkante (4.1, 10.1) anstossen.

Es versteht sich, dass das Innere des Steckhülsenbereichs (4, 10) und insbesondere der Innendurchmesser (D_{Si}) des Steckhülsenbereichs derart dimensioniert ist, dass das jeweilige Leerrohr auch seitlich möglichst satt an der zylindrischen Innenfläche (15, 18) anliegt. Die selbsthemmenden Rastelemente (14, 14") helfen dabei zusätzlich diese Leerrohre im Steckhülsenbereich (4, 10) fest zu halten. Beim Durchziehen der zu installierenden Kabelleitungen treten diese aus den im Steckhülsenbereich steckenden Leerrohren aus und treten durch die Durchgabeöffnung (B_{A}) in das Innere des Trichterbereichs (5, 9) ein. Beim weiteren Transfer der zu installierenden Kabelleitungen werden diese, unabhängig vom bis zu ca. 5 mm weiten Versatz (V), in Durchführrichtung (A) von der kegelstumpfförmigen Innenfläche (16, 17) und durch die sich nach aussen öffnende Transferöffnung (11) des Trichterbereichs (5, 9) der im benachbarten Holzelement angeordneten Montagehülse (M, M') zugeführt, ohne am Hülsenrand (6') dieser Montagehülse (M, M') hängen zu bleiben, und um dann über die Durchgabeöffnung (B_{A}) dieser Montagehülse (M, M') in das darin eingesteckte Leerrohr eingeführt zu werden. Vorteilhafterweise ist auch der steckhülsenseitige Hülsenrand (6") nach innen abgeschrägt, um zu vermeiden, dass das Installations- oder Leerrohr beim Einführen in den Steckhülsenbereich am Hülsenrand (6") anstösst.

Es versteht sich, dass der Fachmann das vorliegende Kabelinstallationssystem ohne weiteres bspw. an die gängigen Durchmesser der Leer- oder Installationsrohre, von bspw. 16 mm, 20 mm, 25 mm, 32 mm, 40 mm, 50 mm oder 63 mm anpasst oder das Design der inneren Flächen der Hülsen in gewünschter Weise anpasst oder ein zusätzliches Deckelelemente verwendet, um zu verhindern, dass während des Transports oder auf dem Bauplatz oder während der Montage der einzelnen Fertigbauteile unerwünschte Verunreinigungen in die vorbereiteten Hülsen gelangen. Es versteht sich auch, dass ein solches Deckelelement einstückig mit den anderen Bereichen der Hülsen verbunden ist, oder als loses Element auf diese aufgeklipst werden kann.

Es versteht sich auch, dass das vorliegende Installationssystem aus einem nicht flammausbreitenden Material, bspw. aus PVC/PA oder sonstigen Spritzgussmaterialien, gefertigt ist und die Vorschriften für Holzelemente für derartige Fertigbauteile erfüllt.

### Bezugszeichenliste

- 1: erste Montagehülse, resp. Einführhülse
- 2: zweite Montagehülse, resp. Aufnahmehülse
- 3: erstes Holzelement, bspw. erstes Rahmenholz
- 4: erster Steckhülsenbereich
- 4.1: erste Anschlagskante
- 5: erster Trichterbereich
- 6: erster Hülsenrand
- 6', 6": oberer und unterer Hülsenrand der Montagehülse
- 7: zweites Holzelement, bspw. zweites Rahmenholz
- 8: zweiter Hülsenrand
- 9: zweiter Trichterbereich
- 10: zweiter Steckhülsenbereich
- 10.1: zweite Anschlagkante
- 11: Transferöffnung des zweiten Trichterbereichs
- 12: Anschlussöffnung des zweiten Steckhülsenbereichs
- 13,13": selbsthemmende Arretierelemente für Hülse
- 14,14": selbsthemmende Rastelemente für Installationsrohr
- 15: erste zylindrische Innenfläche
- 16: erste kegelstumpfförmige Innenfläche
- 17: zweite kegelstumpfförmige Innenfläche
- 18: zweite zylindrische Innenfläche
- 19: Dichtungsring, resp. O-Ring
- 20: Aussenfläche
- A: Durchführrichtung
- B_{A}: Durchgabeöffnung
- D_{Aa}: Aussendurchmesser der zweiten Hülse
- D_{Ea}: Aussendurchmesser der ersten Hülse
- D_{Sa}: Aussendurchmesser der Montagehülse im Steckhülsenbereich
- D_{Si}: Innendurchmesser im Steckhülsenbereich der ersten Hülse
- D_{Ta}: Aussendurchmesser der Montagehülse im Trichterbereich
- D_{Ti}: Innendurchmesser im Trichterbereich der zweiten Hülse
- L1: erstes Leerrohr
- L2: zweites Leerrohr
- M: Montagehülse
- V: Versatz

## Patentansprüche

1. Kabelinstallationssystem im Bereich des Holzsystembaus, welches in aneinanderstoßenden Holzelementen (3, 7) eines Fertigbauteils je eine Montagehülse (1, 2) für das ungehinderte, d.h. versatzunabhängige Durchschieben von Installationsleitungen aufweist, wobei diese Installationsleitungen in flexiblen Leerrohren (L1, L2) geführt sind, und wobei dieses Kabelinstallationssystem eine erste Montagehülse (1) umfasst, welche in ein erstes Holzelement (3) eines Fertigbauteils einsetzbar ist, und eine zweite Montagehülse (2) umfasst, welche in ein zweites Holzelement (7) eines benachbart montierten Fertigbauteils einsetzbar ist,
wobei die erste Montagehülse (1) einen ersten Steckhülsenbereich (4) für die Aufnahme eines ersten Leerrohrs (L1) und einen ersten Trichterbereich (5) für das ungehinderte, d.h. versatzunabhängige Durchschieben von Installationsleitungen aufweist, und wobei die zweite Montagehülse (2) einen zweiten Trichterbereich (9) für das ungehinderte, d.h. versatzunabhängige Durchschieben von Installationsleitungen und einen zweiten Steckhülsenbereich (10) für die Aufnahme eines zweiten Leerrohrs (L2) aufweist,
**dadurch gekennzeichnet,**
**dass** der Außendurchmesser (D_{Ea}) der ersten Montagehülse (1) im Bereich des ersten Steckhülsenbereichs (4) und des ersten Trichterbereichs (5) sowie der Außendurchmesser (D_{Aa}) der zweiten Montagehülse (2) im Bereich des zweiten Steckhülsenbereichs (10) und des zweiten Trichterbereichs (9) gleich groß sind, d.h. D_{Ea} = D_{Aa} ist, wobei die erste Montagehülse (1) und die zweite Montagehülse (2) auf ihren Außenflächen mehrere selbsthemmende Befestigungselemente (13, 13") aufweisen, um die Arretierung der Montagehülsen (1, 2) zu gewährleisten.

2. Kabelinstallationssystem nach Anspruch 1,
**dadurch gekennzeichnet,**
**dass** die erste Montagehülse (1) im ersten Steckhülsenbereichs (4) eine erste zylindrische Innenfläche (15) mit mindestens einem nach innen ragenden Rastelement (14) aufweist.

3. Kabelinstallationssystem nach einem der Ansprüche 1 oder 2,
**dadurch gekennzeichnet,**
**dass** die zweite Montagehülse (2) im zweiten Steckhülsenbereichs (10) eine zweite zylindrische Innenfläche (18) mit mindestens einem nach innen ragenden Rastelement (14") aufweist.

4. Kabelinstallationssystem nach einem der Ansprüche 1 oder 2,
**dadurch gekennzeichnet,**
**dass** der erste Trichterbereich (5) im Innern eine erste kegelstumpfförmige Innenfläche (16) aufweist.

5. Kabelinstallationssystem nach einem der Ansprüche 1 oder 2,
**dadurch gekennzeichnet,**
**dass** der zweite Trichterbereich (9) im Innern eine zweite kegelstumpfförmige Innenfläche (17) aufweist.

6. Kabelinstallationssystem nach Anspruch 1,
**dadurch gekennzeichnet, dass** die Steckhülsenbereiche (4, 10) im Innern eine zylindrische Innenfläche (15, 18) aufweisen und die Trichterbereiche (5, 9) im Innern eine kegelstumpfförmige Innenfläche (16, 17) aufweisen, derart, dass sich die kegelstumpfförmige Innenfläche (16, 17) in Richtung zur zylindrischen Innenfläche (15, 18) des Steckhülsenbereichs (4, 10) verjüngt und an ihrem verjüngten Ende eine Durchgabeöffnung (B_{A}) bildet, welche Durchgabeöffnung (B_{A}) im Steckhülsenbereich (4, 10) eine ringförmige Anschlagkante (4.1, 10.1) bildet.

7. Kabelinstallationssystem nach Anspruch 6,
**dadurch gekennzeichnet,**
**dass** die zylindrische Innenfläche im Steckhülsenbereich (4, 10) mindestens ein nach innen ragendes Rastelement (14) aufweist.

8. Kabelinstallationssystem nach einem der vorhergehenden Ansprüche 6 und 7,
**dadurch gekennzeichnet,**
**dass** die Montagehülsen (1, 2) endseitig einen nach außen ragenden Hülsenrand (6') aufweisen.

9. Kabelinstallationssystem nach Anspruch 6,
**dadurch gekennzeichnet,**
**dass** die Montagehülsen (1, 2) aus einem nichtflammausbreitenden Material gefertigt sind, bspw. aus PVC/PA oder sonstigen Spritzgussmaterialien.

10. Kabelinstallationssystem nach Anspruch 6,
**dadurch gekennzeichnet,**
**dass** die Montagehülsen (1, 2) außenseitig mit einer Abdeckung verschließbar sind.

## Claims

1. A cable installation system in the field of wood construction systems, the cable installation system having an assembly sleeve (1, 2) in each wooden element (3, 7) of a prefabricated piece, which abut against each other, for passing installation cables unhindered, i.e., independently of offsets, these installation cables being routed through flexible ductwork (L1, L2), and this cable installation system comprising a first assembly sleeve (1) which is insertable in a first wooden element (3) of a prefabricated piece and a second assembly sleeve (2) which is insertable in a second wooden element (7) of an adjacently assembled prefabricated piece,
the first assembly sleeve (1) having a first attachable-sleeve area (4) for receiving a first piece of ductwork (L1) and a first hopper area (5) for passing installation cables unhindered, i.e., independently of offsets, and the second assembly sleeve (2) having a second hopper area (9) for passing installation cables unhindered, i.e., independently of offsets, and a second attachable-sleeve area (10) for receiving a second piece of ductwork (L2),
**characterized in that**
the outer diameter (D_{Ea}) of the first assembly sleeve (1) in the area of the first attachable-sleeve area (4) and the first hopper area (5) and the outer diameter (D_{Aa}) of the second assembly sleeve (2) in the area of the second attachable-sleeve area (10) and the second hopper area (9) are equal, i.e., D_{Ea} = D_{Aa}, the first assembly sleeve (1) and the second assembly sleeve (2) having several self-locking fastening elements (13, 13") on its outer surfaces in order to ensure the assembly sleeves (1, 2) are locked in place.

2. The cable installation system according to claim 1,
**characterized in that**
the first assembly sleeve (1) has a first cylindrical inner surface (15) in the first attachable-sleeve area (4), the first cylindrical inner surface (15) having at least one notch element (14), which protrudes inwards.

3. The cable installation system according to claim 1 or 2,
**characterized in that**
the second assembly sleeve (2) has a second cylindrical inner surface (18) in the second attachable-sleeve area (10), the second cylindrical inner surface (18) having at least one notch element (14"), which protrudes inwards.

4. The cable installation system according to claim 1 or 2,
**characterized in that**
the first hopper area (5) has a first frustoconical inner surface (16) in its interior.

5. The cable installation system according to claim 1 or 2,
**characterized in that**
the second hopper area (9) has a second frustoconical inner surface (17) in its interior.

6. The cable installation system according to claim 1,
**characterized in that**
the attachable-sleeve areas (4, 10) have a cylindrical inner surface (15, 18) in their interior and the hopper areas (5, 9) have a frustoconical inner surface (16, 17) in their interior, such that the frustoconical inner surface (16, 17) tapers towards the cylindrical inner surface (15, 18) of the attachable-sleeve area (4, 10) and forms a passage (B_{A}) at its tapered end, the passage (B_{A}) forming an annular abutment edge (4.1, 10.1) in the attachable-sleeve area (4, 10).

7. The cable installation system according to claim 6,
**characterized in that**
the cylindrical inner surface in the attachable-sleeve area (4, 10) has at least one notch element (14), which protrudes inward.

8. The cable installation system according to any one of the preceding claims 6 and 7,
**characterized in that**
on its end side, the assembly sleeves (1, 2) have a sleeve edge (6'), which protrudes outward.

9. The cable installation system according to claim 6,
**characterized in that**
the assembly sleeves (1, 2) are made of a non-flame propagating material, such as PVC/PA or other injection-molding material.

10. The cable installation system according to claim 6,
**characterized in that**
the assembly sleeves (1, 2) are closable from the outside with a cover.

## Revendications

1. Système d'installation de câbles dans le domaine des constructions en bois, le système d'installation de câbles comprenant une douille d'assemblage (1, 2) dans chaque élément en bois (3, 7) d'une partie préfabriquée, qui s'aboutent les uns contre les autres, pour faire passer des câbles d'installation sans entrave, c'est-à-dire indépendamment d'un décalage, ces câbles d'installation étant acheminés à travers des buses flexibles (L1, L2), et ce système d'installation de câbles comprenant une première douille d'assemblage (1) qui est insérable dans un premier élément en bois (3) d'une partie préfabriquée et une deuxième douille d'assemblage (2) qui est insérable dans un deuxième élément en bois (7) d'une partie préfabriquée assemblée de manière adjacente,
la première douille d'assemblage (1) ayant une première zone de contact à pousser (4) pour recevoir une première buse (L1) et une première zone de trémie (5) pour faire passer des câbles d'installation sans entrave, c'est-à-dire indépendamment d'un décalage, et la deuxième douille d'assemblage (2) comportant une deuxième zone de trémie (9) pour faire passer des câbles d'installation sans entrave, c'est-à-dire indépendamment d'un décalage, et une deuxième zone de contact à pousser (10) pour recevoir une deuxième buse (L2),
**caractérisé en ce que**
le diamètre extérieur (D_{Ea} ) de la première douille d'assemblage (1) dans la première zone de contact à pousser (4) et dans la première zone de trémie (5) et le diamètre extérieur (D_{Aa} ) de la deuxième douille d'assemblage (2) dans la deuxième zone de contact à pousser (10) et dans la deuxième zone de trémie (9) sont égaux, c'est-à-dire que D_{Ea} = D_{Aa}, la première douille d'assemblage (1) et la deuxième douille d'assemblage (2) ayant plusieurs éléments de fixation (13, 13") autobloquants sur leurs faces extérieures afin d'assurer le verrouillage des douilles d'assemblage (1, 2).

2. Système d'installation de câbles selon la revendication 1,
**caractérisé en ce que**
la première douille d'assemblage (1) a une première face intérieure cylindrique (15) dans la première zone de contact à pousser (4), la première face intérieure cylindrique (15) ayant au moins un élément à enclenchement (14) qui fait saillie vers l'intérieur.

3. Système d'installation de câbles selon la revendication 1 ou la revendication 2,
**caractérisé en ce que**
la deuxième douille d'assemblage (2) a une deuxième face intérieure cylindrique (18) dans la deuxième zone de contact à pousser (10), la deuxième face intérieure cylindrique (18) ayant au moins un élément à enclenchement (14") qui fait saillie vers l'intérieur.

4. Système d'installation de câbles selon la revendication 1 ou la revendication 2,
**caractérisé en ce que**
la première zone de trémie (5) a une première face intérieure tronconique (16) dans son intérieur.

5. Système d'installation de câbles selon la revendication 1 ou la revendication 2,
**caractérisé en ce que**
la deuxième zone de trémie (9) a une deuxième face intérieure tronconique (17) à l'intérieur.

6. Système d'installation de câbles selon la revendication 1,
**caractérisé en ce que**
les zones de contact à pousser (4, 10) ont une face intérieure cylindrique (15, 18) à l'intérieur et les zones de trémie (5, 9) ont une face intérieure tronconique (16, 17) à l'intérieur, de telle sorte que la face intérieure tronconique (16, 17) s'amincit vers la face intérieure cylindrique (15, 18) de la zone de contact à pousser (4, 10) et forme un passage (B_{A}) à son extrémité amincie, le passage (B_{A}) formant un bord d'arrêt annulaire (4.1, 10.1) dans la zone de contact à pousser (4, 10).

7. Système d'installation de câbles selon la revendication 6,
**caractérisé en ce que**
la face intérieure cylindrique dans la zone de contact à pousser (4, 10) a au moins un élément à enclenchement (14) qui fait saillie vers l'intérieur.

8. Système d'installation de câbles selon l'une quelconque des revendications précédentes 6 et 7,
**caractérisé en ce que**
sur leur côté d'extrémité, les douilles d'assemblage (1, 2) ont un bord de douille (6') qui fait saillie vers l'extérieur.

9. Système d'installation de câbles selon la revendication 6,
**caractérisé en ce que**
les douilles d'assemblage (1, 2) sont réalisées en un matériau non propagateur de la flamme, tel que du PVC/PA ou un autre matériau de moulage par injection.

10. Système d'installation de câbles selon la revendication 6,
**caractérisé en ce que**
les douilles d'assemblage (1, 2) sont refermables de l'extérieur à l'aide d'un revêtement.
